(19) **Europäisches Patentamt**

**European Patent Office**

**Office européen des brevets**

(11) **EP 1 377 429 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **02722005.2**

(22) Anmeldetag: **08.03.2002**

(51) Int Cl.:
**B29C 47/40** *(2006.01)* **B29B 7/42** *(2006.01)*

(86) Internationale Anmeldenummer:
**PCT/DE2002/000901**

(87) Internationale Veröffentlichungsnummer:
**WO 2002/076707 (03.10.2002 Gazette 2002/40)**

(54) **SCHNECKENELEMENT FÜR GLEICHSINNIG DREHENDE MEHRSCHNECKENEXTRUDER**

SCREW ELEMENT FOR SAME-SENSE ROTATING MULTI-SCREW EXTRUDERS

ELEMENT DE VIS SANS FIN POUR EXTRUDEUSE A VIS SANS FIN MULTIPLES TOURNANT DANS LE MEME SENS

(84) Benannte Vertragsstaaten:
**AT BE CH CY DE DK ES FI FR GB GR IE IT LI LU MC NL PT SE TR**

(30) Priorität: **22.03.2001 DE 10114727**

(43) Veröffentlichungstag der Anmeldung:
**07.01.2004 Patentblatt 2004/02**

(73) Patentinhaber: **Berstorff GmbH**
**30625 Hannover (DE)**

(72) Erfinder:
• **UPHUS, Reinhard**
**30419 Hannover (DE)**

• **NOLTING, Matthias**
**31785 Hameln (DE)**

(74) Vertreter: **Harrasz, Julia Konstanze**
**mannesmann plastics machinery GmbH**
**Patentabteilung TS**
**Krauss-Maffei-Strasse 2**
**80997 München (DE)**

(56) Entgegenhaltungen:
**DE-A- 4 239 220** **US-A- 4 300 839**

**Beschreibung**

Die Erfindung betrifft ein Schneckenelement mit einem Außenradius $R_a$ und einem Kemradius $R_i$ für Mehrschneckenextruder mit gleichsinnig drehenden und miteinander kämmenden Schneckenwellen, insbesondere für Doppelschneckenextruder, das im axialen Querschnitt durch seine Längsachse ein Profil aufweist, das an den beiden axialen Stirnseiten jeweils nur einen einem herkömmlichen eingängigen Schneckenelement-für miteinander kämmende Schneckenwellen entsprechenden Schneckensteg aufweist, dessen Stegoberfläche zwischen einer linken und einer rechten Stegkante Teil einer Zylinderoberfläche mit dem Außenradius $R_a$ ist, wobei jede Stirnseite einen kreisförmigen Grund mit dem Kemradius $R_i$ der Schneckenwelle und eine linke und eine rechte Flanke aufweist, die den Grund mit der linken bzw. rechten Stegkante verbindet.

Die Konstruktionsprinzipien zur Erstellung von Schneckenelementen für gleichsinnig drehende und dicht kämmende Mehrschneckenextruder, die auch als Erdmenger-Profile bezeichnet werden, sind seit vielen Jahren bekannt. Eine entsprechende Beschreibung befindet sich beispielsweise in der Buchveröffentlichung "Der Doppelschneckenextruder, Grundlagen und Anwendungsgebiete", VDI Verlag GmbH, Düsseldorf, 1995 (Seiten 10 - 30). In der Abbildung 1.4 (Seite 14) dieser Veröffentlichung ist beispielsweise das Profil eines eingängigen Schneckenelements der eingangs genannten Art im axialen Querschnitt dargestellt.

Zum dispersiven und distributiven Einmischen beispielsweise von Additiven oder sonstigen Komponenten in plastische Massen werden üblicherweise Knetblöcke eingesetzt, die aus mehreren axial hintereinander angeordneten und gegeneinander winkelversetzten Knetscheiben mit Erdmenger-Profil bestehen. Die Knetscheiben sind jeweils paarweise einander gegenüberliegend auf den beiden Schneckenwellen des jeweiligen Doppelschneckenextruders angeordnet und kämmen dicht miteinander. Der Mischprozess in herkömmlichen Knetblöcken ist als statistischer Prozess anzusehen, d.h. dass die in einzelnen Volumenelementen geleistete Mischarbeit unterschiedlich stark ist. Zur Erzielung einer hohen Homogenität der Mischung muss daher sehr viel mechanische Energie aufgewendet werden, um sicherzustellen, dass möglichst jedes Volumenelement auch einer Scherung unterzogen wird. Bezogen auf eine einzelne Knetscheibe wird jeweils ein relativ kleiner Anteil des zu behandelnden Materials extrem stark geschert, während der weitaus größte Teil des Materials dem Scherspalt zwischen Knetscheibe und Zylinderwand ausweicht und somit nur wenig geschert wird. Aus diesem Grunde sind zur Sicherstellung einer hohen Homogenität der Mischung entweder sehr lange Knetblöcke der bekannten Art oder aber hohe Drehzahlen erforderlich. In jedem Fall wird sehr viel mechanische Energie aufgewendet und in Form von Wärme in das zu behandelnde Material eingetragen. Insbesondere bei der Verarbeitung von Kautschukmischungen ist die Entstehung größerer Wärmemengen äußerst unerwünscht.

Aus der DE 42 39 220 A1 ist ein Doppelschneckenextruder mit zwei gleichen, dicht kämmenden und gleichsinnig angetriebenen Schneckenwellen bekannt, die in den Bohrungen eines gemeinsamen Gehäuses angeordnet sind. Die Schneckenwellen sind mit Knetscheiben versehen, welche einen dreigängigen Wellenquerschnitt besitzen, also drei Kämme aufweisen. Der Abstand der Kämme zur Innenoberfläche der Gehäusebohrung und die Breite der Kämme sind unterschiedlich. Der Kamm mit der größten Kammbreite weist dabei den geringsten Abstand zur Innenfläche der Gehäusebohrung auf. Die aus dieser Schrift bekannten Schneckenelemente sind über ihre gesamte axiale Länge dreigängig ausgebildet.

Aufgabe der vorliegenden Erfindung ist es, ein Schneckenelement der gattungsgemäßen Art dahin gehend weiterzubilden, dass bei gleichem Homogenisierungsergebnis ein deutlich geringerer Energieeintrag in das zu behandelnde Material erfolgt.

Gelöst wird diese Aufgabe nach der vorliegenden Erfindung bei einem gattungsgemäßen Schneckenelement durch die im kennzeichnenden Teil des Patentanspruchs 1 angegebenen Merkmale. Vorteilhafte Weiterbildungen der Erfindung ergeben sich aus den abhängigen Ansprüchen.

Das erfindungsgemäße Schneckenelement besitzt im Querschnitt durch seine Längsachse eine vordere und eine hintere Stirnseite, die in ihrer Form derjenigen eines eingängigen Schneckenelements für miteinander kämmende Schneckenwellen von Mehrschneckenextruder entspricht. Dadurch lässt sich dieses Schneckenelement völlig problemlos mit entsprechenden herkömmlichen eingängigen Schneckenelementen für gleichsinnig drehende und miteinander kämmende Schneckenwellen auf einer gemeinsamen Schneckenwelle kombinieren. Vorzugsweise ist die Profilgeometrie des Schneckenelements auf ein dichtes Kämmen der Schneckenelemente ausgelegt. In diesem Fall ist das fertigungstechnisch notwendige Spiel zwischen den Schneckenelementen und der Innenwand des Extrudergehäuses sowie untereinander üblicherweise im Abmessungsbereich weniger Zehntel Millimeter. Der erfindungsgemäße Erfolg lässt sich aber auch noch zu einem wesentlichen Teil erreichen, wenn ein größeres Spiel (im Bereich bis zu mehreren Millimetern, z.B. 1 - 5 mm je nach Gehäusedurchmesser) gewählt wird und die Schneckenelemente sich nicht berühren können, also nicht im strengen Sinne dicht kämmen.

Zur Vermeidung von Missverständnissen sei darauf hingewiesen, dass sich die folgenden Ausführungen jeweils auf ein in Verfahrensrichtung rechts drehendes Schneckenpaar beziehen.

Über die axiale Länge zwischen der vorderen und der hinteren Stirnseite weicht die Form dieses Schneckenelements allerdings deutlich von der bekannten Geometrie eingängiger Schneckenelemente ab, ohne aber die Eigenschaft des Miteinanderkämmens bzw. Dichtkämmens zu verlieren. Die Breite des Schneckenstegs (Kammwinkel) reduziert sich ausgehend von der vorderen Stirnseite und der dem Drehsinn des Schneckenelements entgegengesetzten Stegkante (bei Rechtsdrehung also ausgehend von der linken Stegkante) entlang der Längsachse bis zu einer Teillänge x der axialen Länge I des Schneckenelements bis auf 0 zu einer Kante. Der Abstand dieser Kante von der Längsachse reduziert sich zunächst mit zunehmendem Abstand von der vorderen Stirnseite und nimmt danach allerdings wieder zu, bis diese Kante in der dem Drehsinn des Schneckenelements entsprechenden Stegkante (bei Rechtsdrehung also in der rechten Stegkante) an der hinteren Stirnseite endet. Entsprechend umgekehrt reduziert sich die Breite des Schnekkenstegs ausgehend von der hinteren Stirnseite und der dem Drehsinn entsprechenden Stegkante (bei Rechtsdrehung also rechte Stegkante) entlang der Längsachse bis zu einer Teillänge x der axialen Länge I des Schneckenelements bis auf 0 zu einer Kante, deren Abstand von der Längsachse sich danach zunächst reduziert und die anschließend mit wieder größer werdendem Abstand der Stegoberfläche von der Längsachse in der dem Drehsinn des Schneckenelements entgegengesetzten Stegkante (bei Rechtsdrehung also linke Stegkante) an der vorderen Stirnseite endet. Somit verfügt dieses Schneckenelement statt eines einzelnen Stegs mit gleichbleibender Stegbreite und gleichbleibendem Abstand der Stegoberfläche von der Längsachse über zwei bezüglich der Längsachse symmetrisch zueinander verlaufende Stegelemente, die in einem Abschnitt jeweils einen konstanten Stegradius bei abnehmender Stegbreite (Kammwinkel) und in einem weiteren Abschnitt eine Stegbreite 0 (d.h. Ausbildung einer Kante) und einen sich entlang der Längsachse verändernden Abstand von der Längsachse aufweisen. Darüber hinaus ist das erfindungsgemäße Schnekkenelement jedoch noch durch einen weiteren Steg gekennzeichnet, nämlich einen Schersteg. Dieser Schersteg besitzt einen Scherstegradius $R_s$, d.h. einen Abstand von der Längsachse des Schneckenelements, der größer als der Kemradius $R_i$ und kleiner als der Außenradius $R_a$ ist. Der Schersteg geht von demjenigen Punkt auf der dem Drehsinn des Schneckenelements entsprechenden Flanke (bei Rechtsdrehung also rechte Flanke) der vorderen Stirnseite aus, der die Entfernung Rs von der Längsachse besitzt, und verläuft schraubenlinienförmig entsprechend dem Drehsinn des Schneckenelements zu der dem Drehsinn des Schnekkenelements entgegengesetzten Flanke (bei Rechtsdrehung also linke Flanke) der hinteren Stirnseite. Der Schersteg besteht in seiner axialen Länge aus einem axialen Mittelstück mit im wesentlichen konstanter Stegbreite (d.h. konstanter Kammwinkel) und jeweils einem Übergangsstück vom Mittelstück zur vorderen bzw. hinteren Stirnseite. In diesen Übergangsstücken vermindert sich die Stegbreite jeweils mit zunehmender Annäherung an die Stirnseite vorzugsweise kontinuierlich bis auf 0 zu einer Kante, die an der jeweiligen Stirnseite in der Flanke endet.

Der beschriebene Verlauf des Scherstegs ist im Grundsatz so angelegt, dass er auf das zu behandelnde Material rückfördemd wirkt. Diese Charakteristik lässt sich jedoch deutlich beeinflussen, wenn man der Form des Schnekkenelements zumindest über ein Teilstück seiner axialen Länge eine zusätzliche Steigung überlagert, indem man die Form des Schneckenelements tordiert, also hintereinander liegende Querschnitte gegeneinander verdreht. Bezogen auf die axiale Länge eines Abschnitts des Schneckenelements kann die Größe der Tordierung bei Bedarf in einzelnen Abschnitten unterschiedlich gewählt werden. Zur Verstärkung des Rückfördereffektes des Scherstegs kann die zusätzliche Steigung durch Tordierung des Querschnitts gegenüber der vorderen Stirnseite in Richtung der vorgesehenen Drehrichtung des Schneckenelements vorgenommen werden. Eine Verminderung des Rückfördereffektes oder sogar die Umkehrung in einen besonders vorteilhaften Vorwärtsfördereffekt lässt sich dadurch erreichen, dass die zusätzliche Steigung durch Tordierung des Querschnitts gegenüber der vorderen Stirnseite in Richtung entgegen der vorgesehenen Drehrichtung des Schneckenelements vorgenommen wird. Diese Ausführungsform wird im Rahmen der vorliegenden Erfindung besonders bevorzugt.

Zweckmäßigerweise wird die zusätzliche Steigung dem Schneckenelement über seine gesamte Länge überlagert. Es ist aber auch möglich, mehreren axial hintereinander liegenden Abschnitten des Schneckenelements unterschiedliche zusätzliche Steigungen zu überlagern.

Die Wirkung des erfindungsgemäßen Schneckenelements ist so, dass das durch den jeweiligen Mehrschnekkenextruder geförderte Material in einen Schneckenkanal, also in den jeweiligen Hohlraum zwischen Schneckenelement und dem das Schneckenelement umgebenden Extruderzylinder eingezogen wird, der von einem Schersteg im Sinne einer Barriere begrenzt wird und dessen Querschnittsvolumen in Förderrichtung bis auf 0 reduziert wird, so dass das Material ausnahmslos über den Schersteg gezwungen wird. Somit findet eine definierte Scherung und Dehnung für jedes Volumenelement des zu behandelnden Materials statt. Es sind keine besonderen Rückstauelemente erforderlich, um eine ausreichende Durchmischung sicherzustellen. Daher kann eine mit den erfindungsgemäßen Schneckenelementen bestückte Extruderanlage ohne Weiteres leer gefahren werden. Hinzu kommt, dass das Profil dieses erfindungsgemäßen Schneckenelements selbstreinigend ist, wenn es als dicht kämmendes Schneckenelement ausgelegt ist. Aufgrund dieser Eigenschaften lassen sich Materialwechsel und auch Farbwechsel bei einer mit den erfindungsgemäßen Schneckenelementen bestückten Extruderanlage besonders schnell und unter geringstem Aufwand bewerkstelligen.

Nachfolgend wird die vorliegende Erfindung anhand der in den Figuren dargestellten Ausführungsbeispiele näher erläutert. Es zeigen:

Fig. 1, 2  perspektivische Ansichten eines erfindungsgemäßen Schneckenelements,

Fig. 3    eine Seitenansicht des Schneckenelements gemäß den Figuren 1 und 2,

Fig. 4 - 10    Axialschnitte gemäß Figur 3 und

Fig. 11 - 12    perspektivische Ansichten eines erfindungsgemäßen Schneckenelements mit zusätzlich überlagerter Steigung.

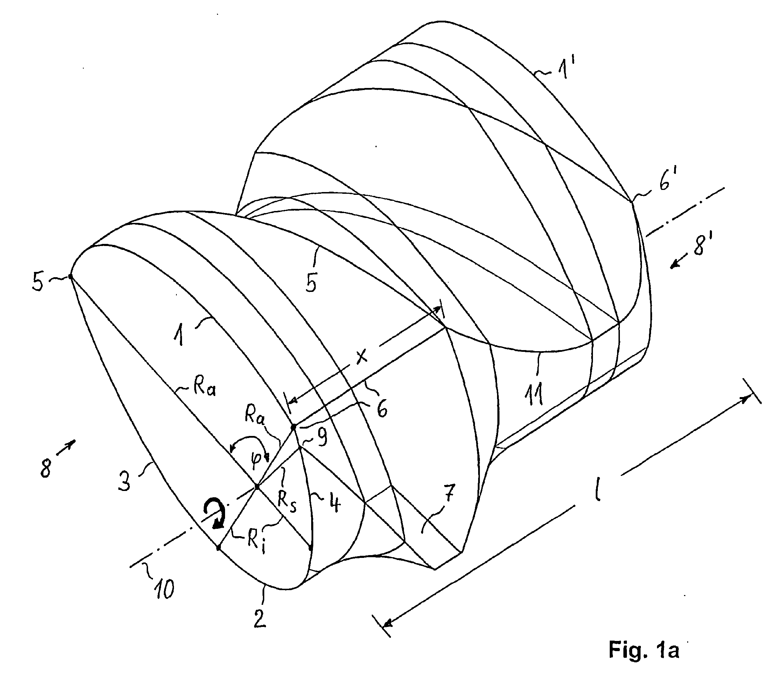

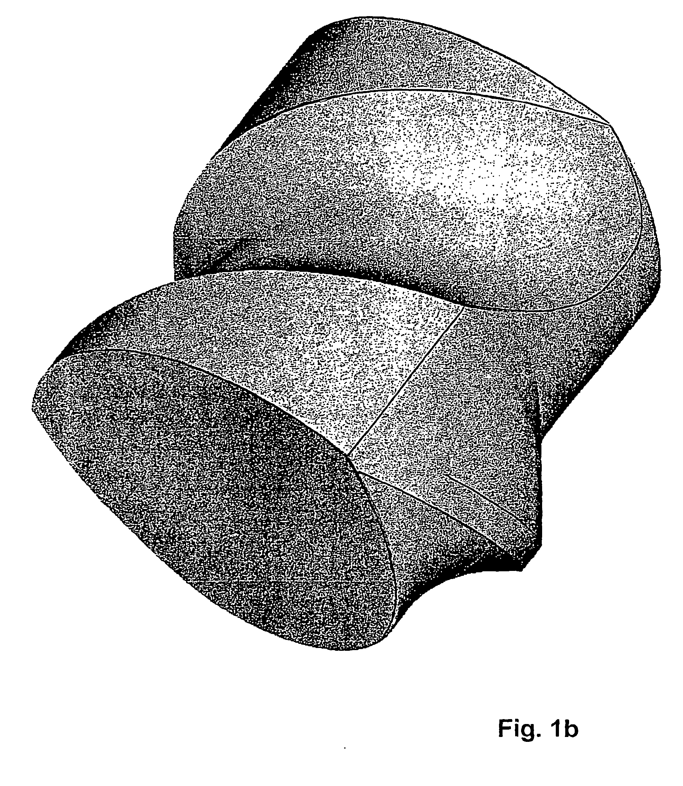

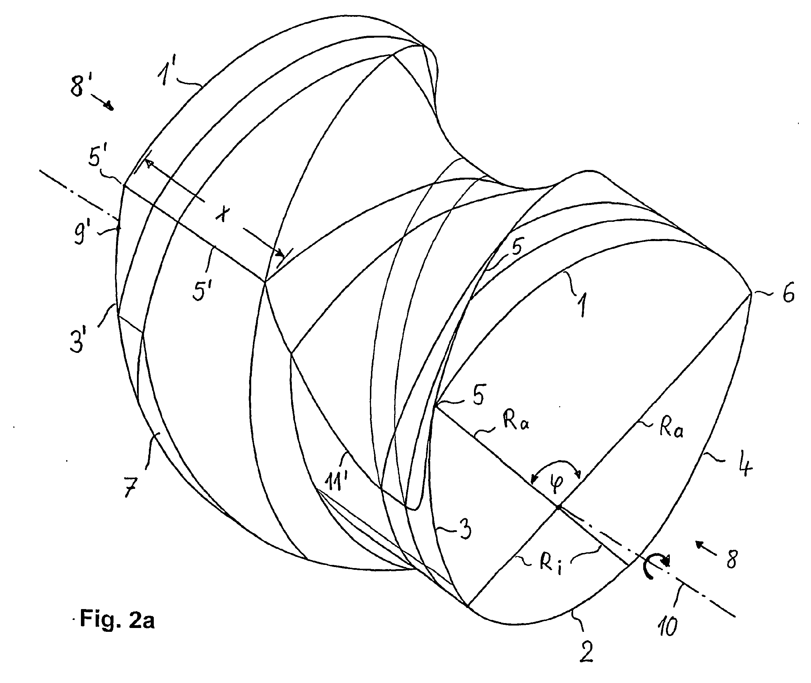

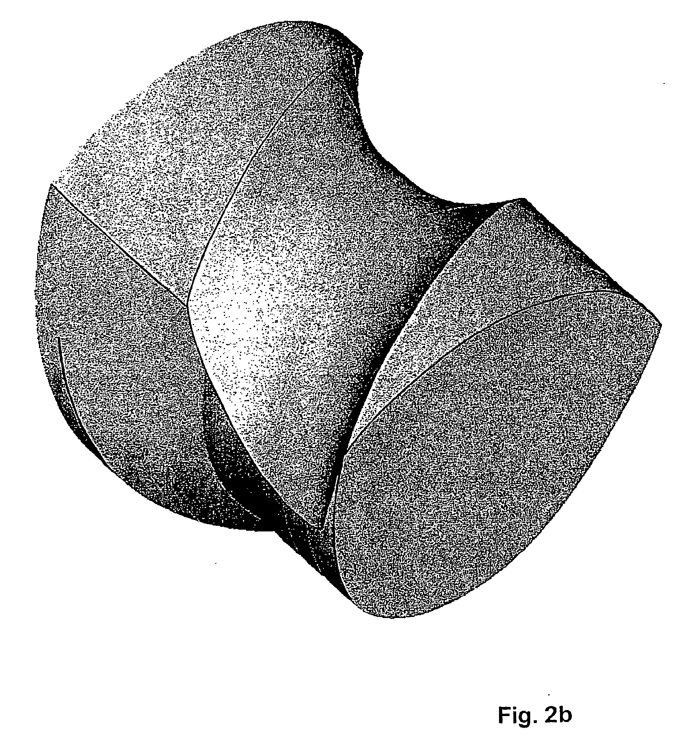

Das in den Fig. 1 und 2 in einer perspektivischen Ansicht von rechts vorne bzw. von links vorne gezeigte erfindungsgemäße Schneckenelement (in Fig. 1a und Fig. 2a als Draht- und in Fig. 1 bund Fig. 2b als Flächenmodell) ist, wie durch den auf die vordere Stirnseite 8 aufgetragenen dicken Pfeil angedeutet ist, für eine rechtsdrehende Schneckenwelle vorgesehen. Das Profil der Stirnseite 8 ist im gewählten Ausführungsbeispiel das eines dicht kämmenden eingängigen Schneckenelements nach Erdmenger. Die Längsachse des Schneckenelements, das eine axiale Länge 1 aufweist, ist mit 10 bezeichnet. Zwischen den Punkten 5, 6, die auch als Stegkanten zu bezeichnen sind, erstreckt sich der Steg 1, der eine zylindermantelförmige Oberfläche aufweist und im stirnseitigen Schnitt als Kreisbogen mit dem Radius $R_a$ um den durch die Längsachse 10 definierten Mittelpunkt ausgebildet ist. Die Stegbreite ist durch den Kammwinkel $\varphi$ definiert, der zwischen den beiden durch die linke bzw. rechte Stegkante 5, 6 gehenden Radien $R_a$ eingeschlossen ist. Diametral gegenüber dem Steg 1 liegt der Grund 2, der ebenfalls eine zylindermantelförmige Gestalt aufweist und daher im Stirnschnitt kreisförmig ist. Der Radius des Grundes ist mit $R_i$ bezeichnet und entspricht dem Kerndurchmesser der zugehörigen Schneckenwelle (Kernradius $R_i$). In Umfangsrichtung erstreckt sich der Grund 2 der Stirnseite 8 ebenso wie der Steg 1 über einen Winkel $\varphi$. Zwischen dem Steg 1 und dem Grund 2 liegen zwei Flanken 3, 4, die in der Stirnfläche 8 jeweils einem Kreisbogen mit dem Radius $R_a + R_i$ entsprechen. Der Kreismittelpunkt für die Flanke 4 liegt auf der gegenüberliegenden linken Stegkante 5, während der Mittelpunkt der linke Flanke 3 auf der gegenüberliegenden rechten Stegkante 6 liegt. Grundsätzlich ist es möglich, den Kammwinkel $\varphi$ für den Steg 1 unterschiedlich zu dem Kammwinkel für den Grund 2 zu wählen. In diesem Fall würde das mit dem jeweiligen Schneckenelement kämmende Gegenelement jedoch eine entsprechend komplementär andere Form aufweisen müssen. Insbesondere aus fertigungstechnischen Gründen empfiehlt es sich, die beiden Kammwinkel wie im dargestellten Ausführungsbeispiel gemäß Figur 1 gleich zu wählen, um jeweils 2 gleichartige Schneckenelemente miteinander kämmen zu lassen.

Die der vorderen Stirnseite 8 gegenüberliegende hintere Stirnseite 8' weist eine völlig gleichartige Profilform auf. Zur Unterscheidung zu den Punkten bzw. Profillinien der vorderen Stirnseite 8 sind die entsprechenden Punkte und Profillinien der hinteren Stirnseite 8' unter Beibehaltung der Nummerierung mit einem zusätzlichen Strich gekennzeichnet, wie dies aus den Figuren 1 und 2 hervorgeht. Letztere zeigt das Schneckenelement aus Figur 1 in einer perspektivischen Ansicht von links vorne Zwischen den beiden Stirnseiten 8, 8' weist das Schneckenelement folgende Form auf: In axialer Richtung von der vorderen Stirnseite 8 zur hinteren Stirnseite 8' nimmt die Breite des Stegs 1 bis zu einer axialen Teillänge x ausgehend von der linken Stegkante 5 bis auf den Wert 0 ab. An der Stelle der Teillänge x fallen beide Stegkanten 5, 6 also zu einem Punkt zusammen und setzen sich danach in einer gemeinsamen Kante 11 fort, die in der rechten Stegkante 6' der hinteren Stirnseite 8' endet. Der Abstand der Kante 11 von der Längsachse 10 nimmt dabei zunächst über ein weiteres Teilstück der axialen Länge ab und steigt dann wieder bis auf den ursprünglichen Wert $R_a$ im Punkt 6' an. Entsprechend umgekehrt nimmt die Stegbreite 1' ausgehend von der rechten hinteren Stegkante 6' in Richtung auf die vordere Stirnseite 8 bis zum Erreichen einer axialen Teillänge x auf den Wert 0 ab. Dort fallen die beiden Stegkanten 6' und 5' wiederum in einem Punkt zusammen und setzen sich in einer Kante 11' bis zum Erreichen der linken Stegkante 5 in der vorderen Stirnseite 8 fort. Die Kante 11' hat einen entsprechenden Verlauf wie die Kante 11, verringert also mit zunehmender Annäherung an die Stirnseite 8 zunächst ihren Abstand von der Längsachse 10 ausgehend vom ursprünglichen Wert $R_a$ über ein gewisses Teilstück der axialen Länge und steigt danach wieder bis auf den ursprünglichen Wert $R_a$ an. Neben den beiden untereinander ähnlichen Stegelementen in Gestalt des Stegs 1 und der Kante 11 bzw. des Stegs 1' und der Kante 11' verfügt das erfindungsgemäße Schneckenelement noch über ein drittes Stegelement in Gestalt eines Scherstegs 7, der sich mit gleichbleibendem Abstand (Scherstegradius $R_S$) von der Längsachse 10 ausgehend von der rechten Flanke 4 an der vorderen Stirnseite 8 in der für das erfindungsgemäße Schneckenelement vorgesehenen Drehrichtung (also hier rechtsdrehend) bis zu einem entsprechenden Punkt 9' auf der linken Flanke 3' an der hinteren Stirnseite 8' erstreckt. Die Stegbreite (gemessen als Scherstegkammwinkel von der Längsachse 10 aus, in Fig. 1 und 2 nicht dargestellt) ist in einem mittleren Abschnitt der axialen Länge I konstant. Letzteres ist aber nicht zwingend notwendig. Zwischen der vorderen Stirnseite 8 und der hinteren Stirnseite 8' setzt sich das Mittelstück des Scherstegs 7 jeweils in einem Übergangsstück bis zu den beiden Stirnseiten 8, 8' fort. In diesem Übergangsstück bleibt der Abstand (Scherstegradius $R_S$) zur Längsachse 10 jeweils konstant. Ausgehend von der jeweiligen Stirnseite 8, 8' hat der Schersteg 7 über ein erstes axiales Teilstück zunächst die Breite 0, ist also eine Kante, und verbreitert sich in einem zweiten axialen Teilstück von 0 bis auf die Scherstegbreite des Mittelstücks des Scherstegs 7.

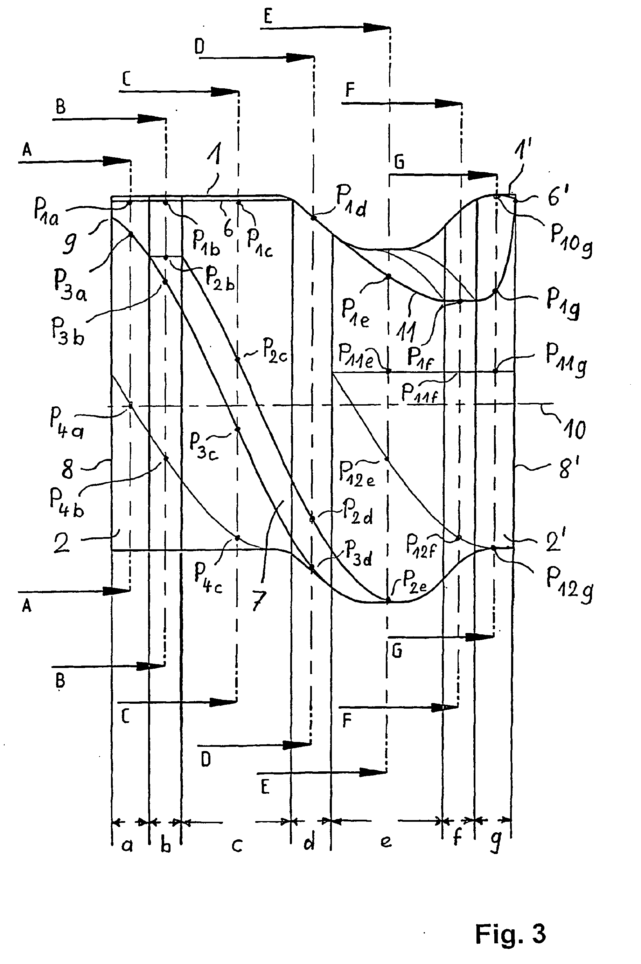

Die Figur 3 zeigt das erfindungsgemäße Schneckenelement in einer Seitenansicht. Über die axiale Länge I ist dieses Schneckenelement in Teilstücke aufgeteilt, deren axiale Länge mit den Buchstaben a - g gekennzeichnet sind.

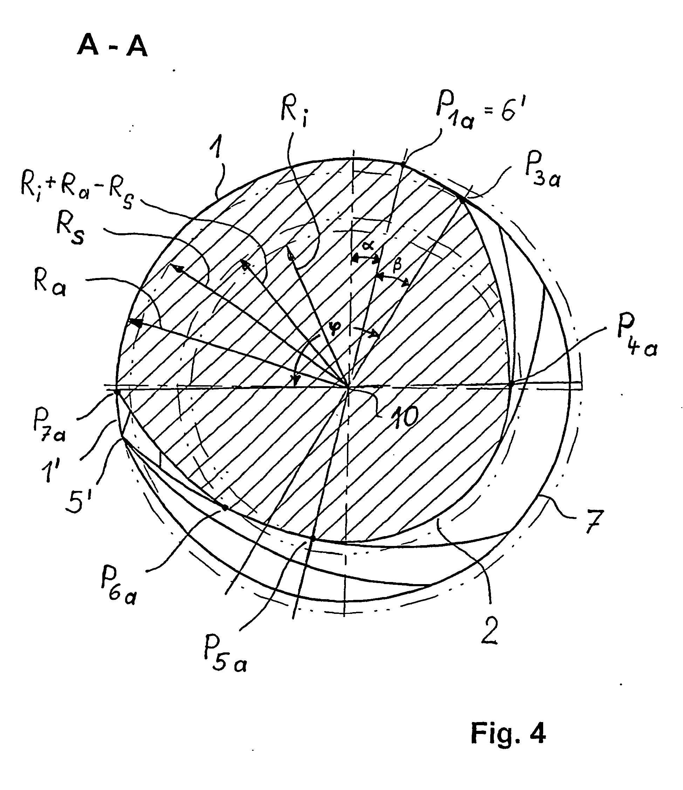

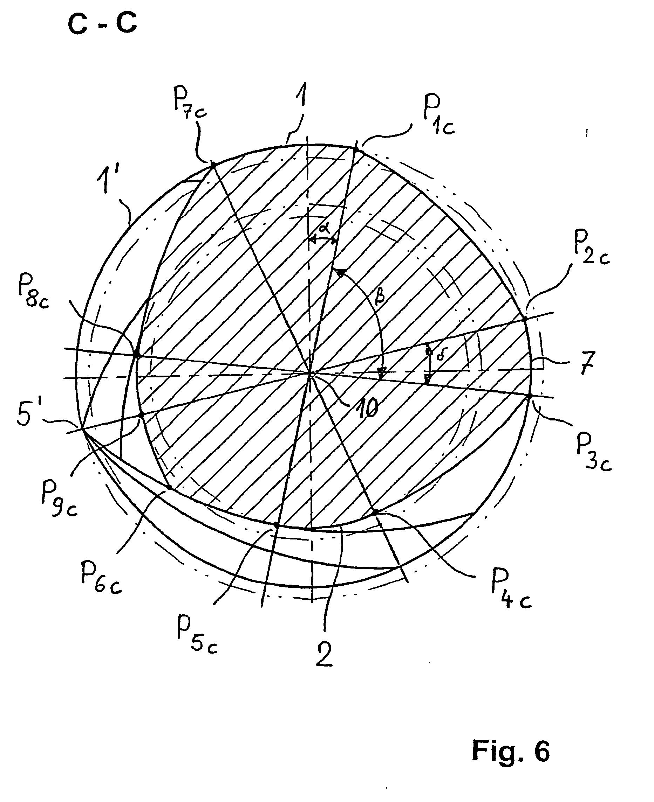

Im gewählten Ausführungsbeispiel sind die axialen Längen der Teilstücke a und g bzw. b und f bzw. c und e paarweise untereinander gleich. Durch die einzelnen Teilstücke sind jeweils quer zur Längsachse 10 insgesamt 7 Schnitte gelegt, die mit den Buchstaben A-A bis G-G bezeichnet sind. Diese 7 Schnitte sind in den Figuren 4 bis 10 im einzelnen dargestellt. Vergleichbare markante Punkte der Querschnitte sind jeweils mit P und einem gleich bleibenden Zahlenindex gekennzeichnet. Zur Unterscheidung der einzelnen Schnitte ist der Zahlenindex durch einen dem jeweiligen Schnitt (z.B. A-A) entsprechenden zusätzlichen kleinen Buchstaben (z.B. a) ergänzt. Durch Vergleich der einzelnen Schnitte sind die Verläufe der Stegelemente, die entsprechend der Kennzeichnung aus den Figuren 1 - 3 ebenfalls angegeben sind, im einzelnen verfolgen. Aus der Tabelle 1 sind zu jedem der sieben Profilschnitte die Parameterangaben zu den einzelnen Kreisbögen entnehmbar (Eckpunkte, Radius, Mittelpunkt), aus denen die Profilschnitte A-A bis G-G jeweils zusammengesetzt sind, so dass auf eine ausführliche verbale Beschreibung verzichtet werden kann.

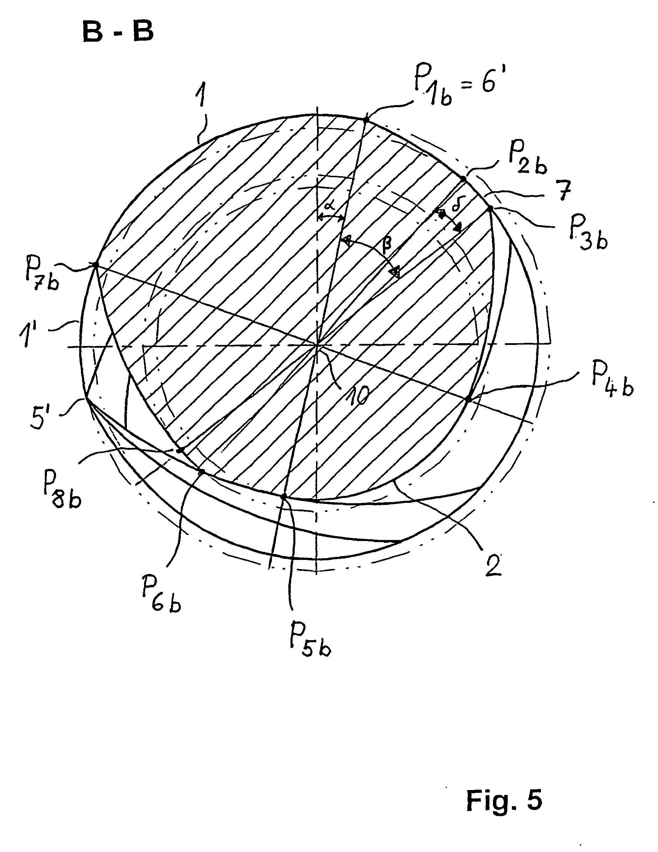

Stellvertretend für die übrigen Schnittbilder (Figur 5 bis 10) sind in Figur 4 die Radien von vier für die Konstruktion wichtigen Kreisen eingetragen, nämlich der Außenradius $R_a$, der Scherstegradius $R_S$, der Kemradius $R_i$ und ein Radius $R_i + R_a - R_S$. Weiterhin ist der Kammwinkel $\varphi$ des Scherstegs 1 angegeben. Mit dem Winkel $\alpha$ ist der Winkel bezeichnet, um den die rechte Stegkante 6' um die Längsachse 10 (= Mittelpunkt des jeweiligen Profilschnitts) gegenüber der Vertikalen verdreht ist. Dieser Winkel $\alpha$ hat auf die Konstruktion des Profilquerschnitts aber keinen Einfluss. Mit $\beta$ ist der Windungswinkel des Scherstegs 7 bezeichnet, dabei handelt es sich um denjenigen Winkel, um den im Querschnitt gesehen die rechte Stegkante des Scherstegs 7, die jeweils die Punktbezeichnung $P_3$ (also $P_{3a}$ - $P_{3g}$) trägt, gegenüber der rechten Stegkante 6 bzw. 6' um die Längsachse 10 verdreht ist. In der Tabelle 2 ist für jeden der gemäß Figur 3 festgelegten Profilabschnitte a - g eingetragen, welchen Wert der Winkel $\beta$ am Anfang (Anfangsgrenzwinkel) und am Ende (Endgrenzwinkel) des jeweiligen Profilabschnitts aufweist. Innerhalb des jeweiligen Profilabschnitts verändert sich der Winkel $\beta$ kontinuierlich zwischen diesen beiden Grenzwinkeln. Zusätzlich ist in Tabelle 2 auch zu jedem Profilabschnitt angegeben, welchen Wert der Scherstegkammwinkel $\delta$ in diesen Profilabschnitten jeweils aufweist. In den Profilabschnitten a und g ist der Winkel $\delta$ jeweils konstant gleich 0°, d.h. die Scherstegbreite ist 0 (Kante). In den Profilabschnitten c, d und e liegt der Scherstegkammwinkel jeweils bei dem Wert $\delta_{soll}$, d.h. es liegt eine konstante Scherstegbreite vor. In den beiden Abschnitten b und f nimmt die Scherstegbreite bzw. der Scherstegkammwinkel $\delta$ von 0° kontinuierlich bis auf den gewünschten Wert $\delta_{soll}$ zu bzw. nimmt von diesem Wert $\delta_{soll}$ bis auf 0 ab.

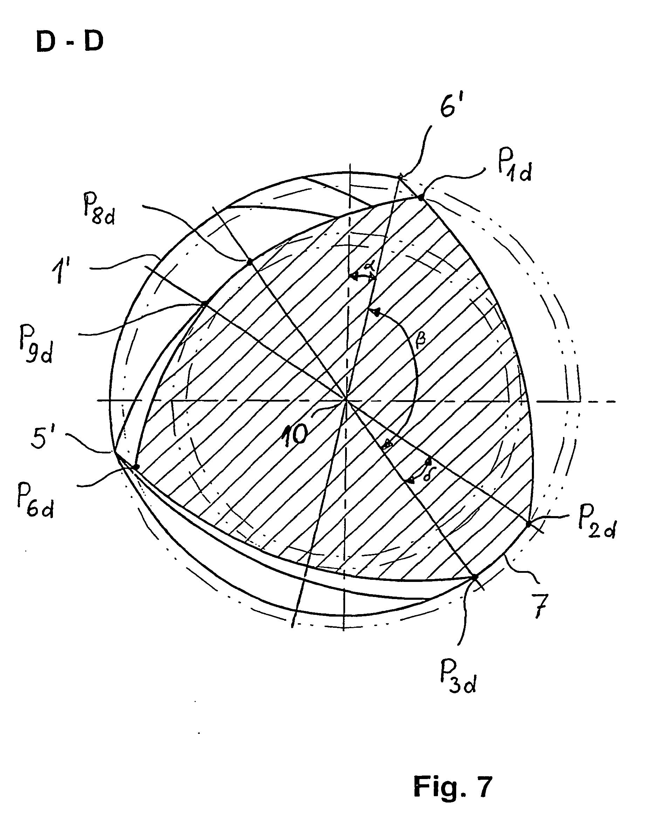

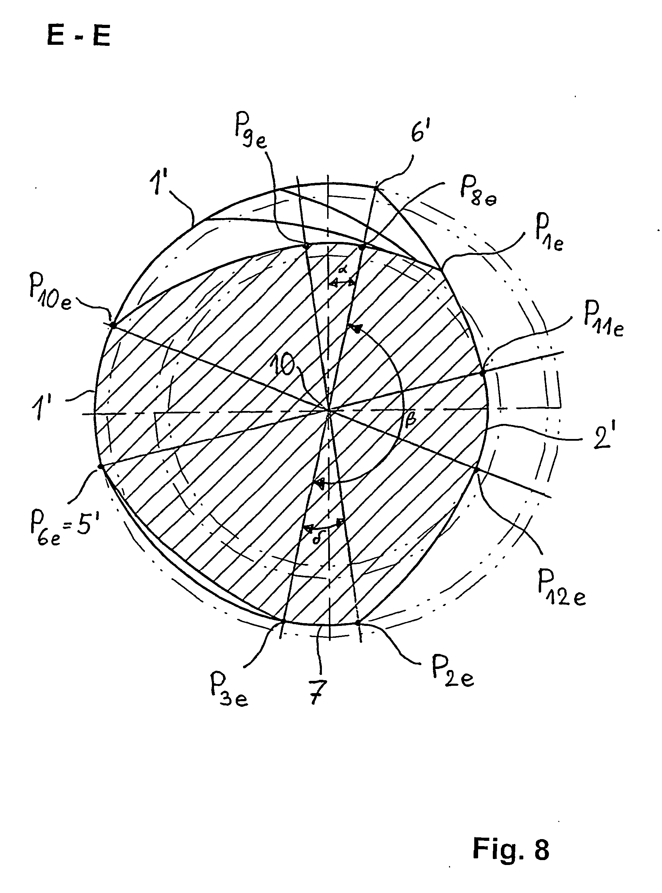

Die Figuren 4 bis 6 zeigen, dass die Breite des zwischen den Punkten $P_7$ und $P_1$ liegenden Steges 1 vom Schnitt A-A bis zum Schnitt C-C deutlich abnimmt. In Figur 7 ist der Steg 1 nicht mehr vorhanden und nur noch die aus ihm hervorgehende Kante 11 erkennbar, auf der der Punkt $P_1$ ($P_{1d}$) weiterwandert (Figuren 8 - 10) in Form der Punkte $P_{1e}$ bis $P_{1g}$, bis er schließlich an der hinteren Stirnseite 8' mit der hinteren rechten Stegkante 6' zusammenfällt (Figur 3). Entsprechendes gilt für den Steg 1',der an der hinteren Stirnseite 8' von den beiden Stegkanten 5' und 6' begrenzt ist, wenn man die Figuren 4 bis 10 der Reihenfolge rückwärts betrachtet und dabei das Wandern der Punkte $P_{10}$ ($P_{10g}$, $P_{10f}$) und $P_6$ ($P_{6g}$ - $P_{6a}$) verfolgt.

Im Hinblick auf den Schersteg 7 ist folgendes festzustellen: In Figur 4 ist der Schersteg nur in dem ungeschnittenen hinteren Teil des Schneckenelements erkennbar. Im Schnitt A-A ist die Breite des Scherstegs 7 null, dieser also nur als Kante im Punkt $P_{3a}$ repräsentiert. In der nächsten Figur 5 hat der Schersteg 7, wie dies auch aus der Seitenansicht des Profilabschnitts b in Figur 3 hervorgeht, bereits etwa die Hälfte seines Sollwertes erreicht, was durch den Scherstegkammwinkel $\delta$ angedeutet wird.

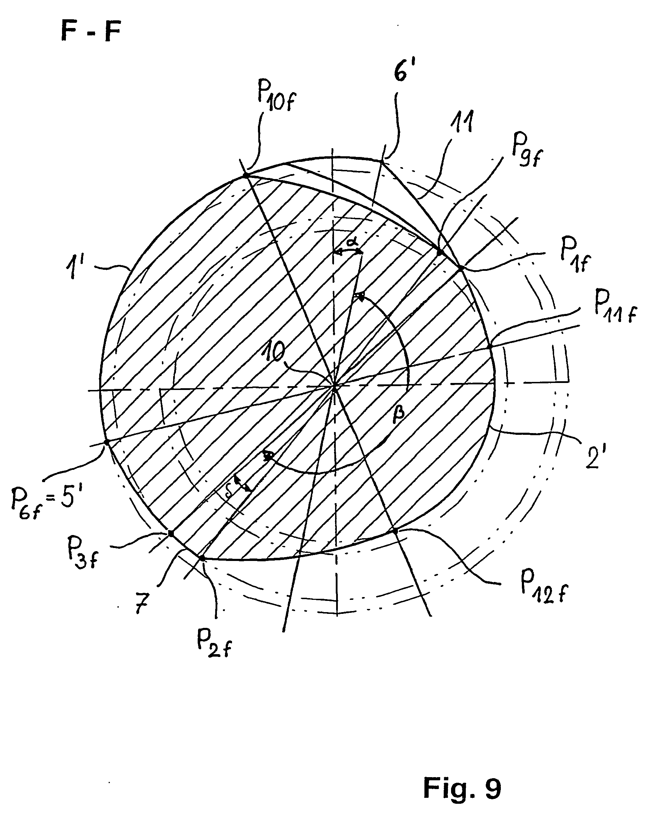

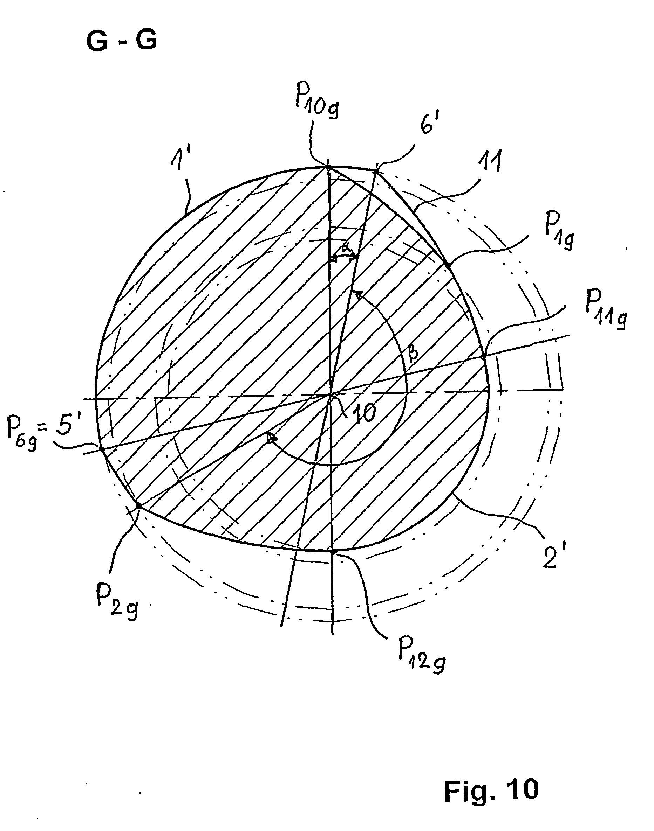

Der Schnitt C-C in Figur 3 zeigt den Schersteg 7 mit seiner vollen Sollbreite, die sich zwischen den Punkten $P_{2c}$ und $P_{3c}$ erstreckt. Diese Sollbreite des Scherstegs 7 liegt auch in den beiden nächsten Schnitten D-D (Figur 7) und E-E (Figur 8) vor. In Figur 9 (Schnitt F-F) rücken die beiden Punkten $P_2$ und $P_3$ wieder näher aneinander, d.h. dass die Breite des Scherstegs 7 in Gestalt des Scherstegkammwinkel $\delta$ wieder abnimmt. Insoweit entspricht die Figur 9 der Darstellung in Figur 5. In Figur 10 ist der Schersteg 7 wieder zu einer Kante zusammengeschrumpft, die durch den Punkt $P_{2g}$ repräsentiert wird. Insoweit entspricht Figur 10 der Darstellung von Figur 4. Soweit die einzelnen Profilpunkte $P_1$ bis $P_{12}$ aus den Figuren 4 bis 10 in der Seitenansicht der Figur 3 erkennbar sind, sind diese dort eingetragen.

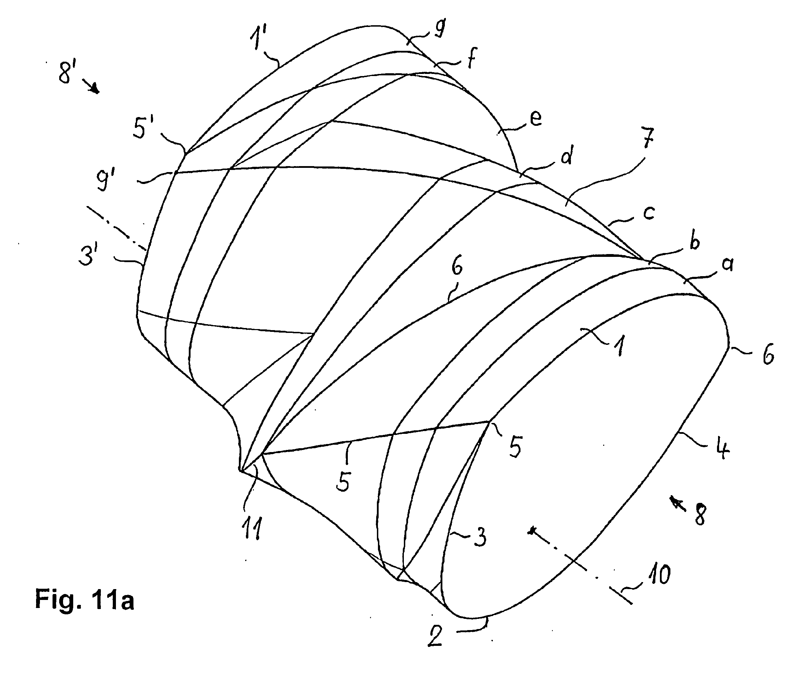

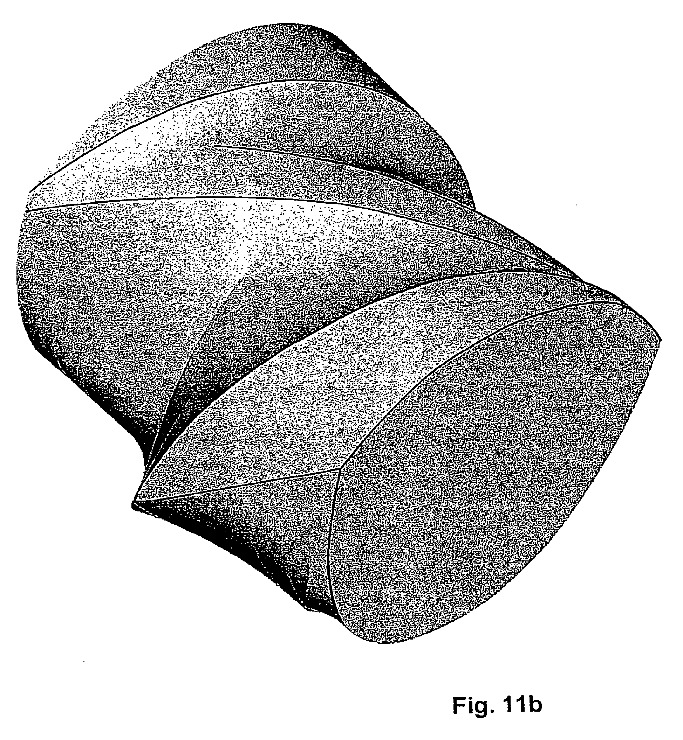

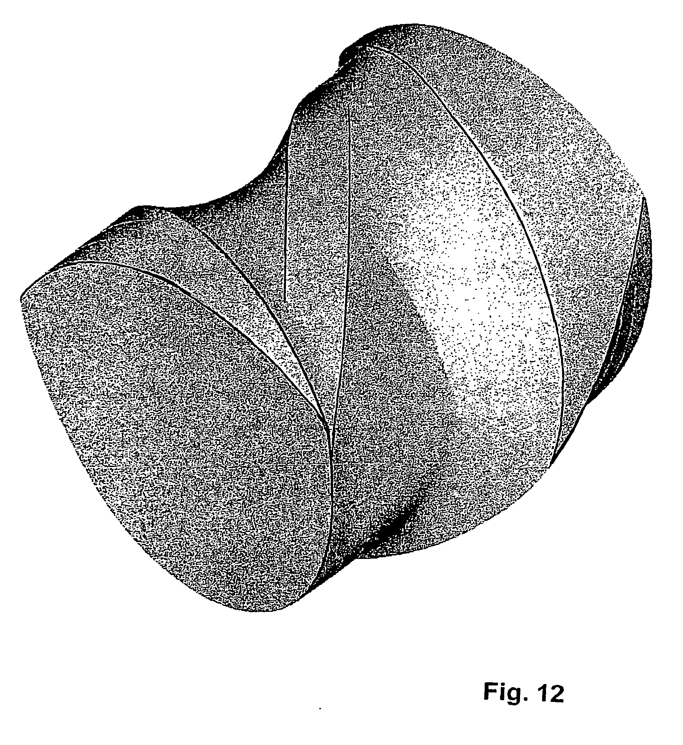

In den Figuren 11 und 12 ist eine Abwandlung des Schneckenelements gemäß den Figuren 1 - 3 von links bzw. rechts vorne dargestellt (in Fig. 11a als Draht- und in Fig 12b als Flächenmodell). Dieses unterscheidet sich lediglich dadurch, dass dem Schneckenelement eine zusätzliche.Steigung überlagert worden ist. Im vorliegenden Beispiel entspricht diese zusätzliche Steigung einer Tordierung durch Verdrehung des Profils der hinteren Stirnseite 8' gegenüber der vorderen Stirnseite 8 um einen Verdrehwinkel von 360° entgegen der vorgesehenen Drehrichtung des Schneckenprofils (also Verdrehung nach links). Im vorliegenden Fall wurde die Tordierung des Profilquerschnitts gleichmäßig über die gesamte axiale Länge des Schneckenprofils vorgenommen. Dadurch verläuft die rechte Stegkante nicht mehr wie in Figur 3 parallel zur Längsachse 10, sondern windet sich mit einem Linksdrall um die Längsachse 10. Die linke Stegkante 5 windet sich nicht mehr wie in Figur 2 mit einem Rechtsdrall um die Längsachse 10, sondern ebenfalls mit einem Linksdrall. Entsprechendes gilt für die Kante 11, in der sich die linke und die rechte Stegkante 5, 6 fortsetzen. Weiterhin erkennt man aus Figur 11 den Verlauf des Scherstegs 7, der sich nicht mehr um mehr als 180° rechtsdrehend um die Längsachse 10 windet, sondern jetzt linksdrehend über einen Winkel von weniger als 180° von der Flanke 4 aus dem Nahbereich der rechten Stegkante 6 der vorderen Stirnseite bis zur linken Flanke 3' in den Nahbereich der linken Stegkante 5' der hinteren Stirnseite 8' verläuft.

Im vorliegenden Ausführungsbeispiel wurde jeweils eine lineare Änderung des Winkels $\beta$ zu Grunde gelegt, die also proportional zum jeweiligen axialen Abstand eines Profilschnitts von der vorderen Stirnseite ist. Selbstverständlich ist es auch möglich, eine andersartige veränderliche Zunahme des Winkels $\beta$ als Funktion der axialen Länge festzulegen. Entsprechendes gilt auch für die Zunahme des Winkels $\delta$ von 0˚ auf den gewünschten Sollwert. Zu letzterem ist anzumerken, dass dieser Sollwert, also die Scherstegbreite im axialen Mittelbereich des Schneckenelements, nicht unbedingt streng konstant sein muss. Eine konstante Scherstegbreite bedeutet eine über die axiale Länge des Scherstegs konstante Größe der Scherung.

Bezugszeichenliste:

| | |
|---|---|
| 1,1' | Schneckensteg |
| 2, 2' | Grund |
| 3, 3' | linke Flanke |
| 4, 4' | rechte Flanke |
| 5, 5' | linke Stegkante |
| 6,6' | rechte Stegkante |
| 7 | Schersteg |
| 8, 8' | vordere bzw. hintere Stirnseite |
| 9, 9' | Punkt |
| 10 | Längsachse |
| 11, 11' | Kante |

| | |
|---|---|
| x | axiale Teillänge |
| I | axiale Länge |
| $\alpha$ | Verdrehwinkel des Profils |
| $\beta$ | Windungswinkel des Scherstegs |
| $\delta$ | Schersteg-Kammwinkel |
| $\varphi$ | Kammwinkel |
| $R_a$ | Außenradius |
| $R_i$ | Kemradius |
| $R_s$ | Scherstegradius |
| $P_{1a}$ - $P_{12g}$ | Punkte in den Profilschnitten A-A bis G-G |
| a-g | Profilabschnitt in axialer Richtung |

*Tabelle 1*

| Profilschnitt | | Parameterangaben zu den Kreisbögen der Profilschnitte | | | | | | | | |
|---|---|---|---|---|---|---|---|---|---|---|
| A-A | Endpunkte | $P_{1a}$, $P_{3a}$ | $P_{3a}$, $P_{4a}$ | $P_{4a}$, $P_{5a}$ | $P_{5a}$, $P_{6a}$ | $P_{6a}$, $P_{7a}$ | $P_{7a}$, $P_{1a}$ | | | |
| | Radius | $R_a + R_i$ | $R_a + R_i$ | $R_i$ | $R_a + R_i$ | $R_a + R_i$ | $R_a$ | | | |
| | Mittelpunkt | $P_{6a}$ | $P_{7a}$ | 10 | $P_{1a}$ | $P_{3a}$ | 10 | | | |
| B-B | Endpunkte | $P_{1b}$, $P_{2b}$ | $P_{2b}$, $P_{3b}$ | $P_{3b}$, $P_{4b}$ | $P_{4b}$, $P_{5b}$ | $P_{5b}$, $P_{6b}$ | $P_{6b}$, $P_{8b}$ | $P_{8b}$, $P_{7b}$ | $P_{7b}$, $P_{1b}$ | |
| | Radius | $R_a + R_i$ | $R_S$ | $R_a + R_i$ | $R_i$ | $R_a + R_i$ | $R_i + R_a - R_s$ | $R_a + R_i$ | $R_a$ | |
| | Mittelpunkt | $P_{6b}$ | 10 | $P_{7b}$ | 10 | $P_{1b}$ | 10 | $P_{3b}$ | 10 | |
| C-C | Endpunkte | $P_{1c}$, $P_{2c}$ | $P_{2c}$, $P_{3c}$ | $P_{3c}$, $P_{4c}$ | $P_{4c}$, $P_{5c}$ | $P_{5c}$, $P_{6c}$ | $P_{6c}$, $P_{9c}$ | $P_{9c}$, $P_{8c}$ | $P_{8c}$, $P_{7c}$ | $P_{7c}$, $P_{1c}$ |
| | Radius | $R_a + R_i$ | $R_S$ | $R_a + R_i$ | $R_i$ | $R_a + R_i$ | $R_a + R_i$ | $R_i + R_a - R_S$ | $R_a + R_i$ | $R_a$ |
| | Mittelpunkt | $P_{6c}$ | 10 | $P_{7c}$ | 10 | $P_{1c}$ | $P_{2c}$ | 10 | $P_{3c}$ | 10 |

(fortgesetzt)

| Profilschnitt | Parameterangaben zu den Kreisbögen der Profilschnitte | | | | | | | | |
|---|---|---|---|---|---|---|---|---|---|---|
| D-D | Endpunkte | $P_{1d}$, $P_{2d}$ | $P_{2d}$, $P_{3d}$ | $P_{3d}$, $P_{6d}$ | $P_{6d}$, $P_{9d}$ | $P_{9d}$, $P_{8d}$ | $P_{8d}$, $P_{1d}$ | | | |
| | Radius | $R_a + R_l$ | $R_S$ | $R_a + R_l$ | $R_a + R_l$ | $R_l + R_a - R_S$ | $R_a + R_l$ | | | |
| | Mittelpunkt | $P_{6d}$ | 10 | $P_{1d}$ | $P_{2d}$ | 10 | $P_{3d}$ | | | |
| E-E | Endpunkte | $P_{1e}$, $P_{11e}$ | $P_{11e}$, $P_{12e}$ | $P_{12e}$, $P_{2e}$ | $P_{2e}$, $P_{3e}$ | $P_{3e}$, $P_{6e}$ | $P_{6e}$, $P_{10e}$ | $P_{10e}$, $P_{9e}$ | $P_{9e}$, $P_{8e}$ | $P_{8e}$, $P_{1e}$ |
| | Radius | $R_a + R_l$ | $R_i$ | $R_a + R_l$ | $R_S$ | $R_a + R_l$ | $R_a$ | $R_a + R_i$ | $R_l + R_a - R_S$ | $R_a + R_l$ |
| | Mittelpunkt | $P_{6e}$ | 10 | $P_{10e}$ | 10 | $P_{1e}$ | 10 | $P_{2e}$ | 10 | $P_{3e}$ |
| F-F | Endpunkte | $P_{1f}$, $P_{11f}$ | $P_{11f}$, $P_{12f}$ | $P_{12f}$, $P_{2f}$ | $P_{2f}$, $P_{3f}$ | $P_{3f}$, $P_{6f}$ | $P_{6f}$, $P_{10f}$ | $P_{10f}$, $P_{9f}$ | $P_{9f}$, $P_{1f}$ | |
| | Radius | $R_a + R_l$ | $R_l$ | $R_a + R_l$ | $R_S$ | $R_a + R_i$ | $R_a$ | $R_a + R_i$ | $R_i + R_a - R_S$ | |
| | Mittelpunkt | $P_{6f}$ | 10 | $P_{10f}$ | 10 | $P_{1f}$ | 10 | $P_2f$ | 10 | |
| G-G | Endpunkte | $P_{1g}$, $P_{11g}$ | $P_{11g}$, $P_{12f}$ | $P_{12g}$, $P_{2g}$ | $P_{2g}$, $P_{6g}$ | $P_{6g}$, $P_{10g}$ | $P_{10g}$, $P_{1g}$ | | | |
| | Radius | $R_a + R_i$ | $R_i$ | $R_a + R_i$ | $R_a + R_i$ | $R_a$ | $R_a + R_i$ | | | |
| | Mittelpunkt | $P_{6g}$ | 10 | $P_{10g}$ | $P_{1g}$ | 10 | $P_{2g}$ | | | |

**Tabelle 2**

| Profilabschnitt | Anfangsgrenzwinkel | Endgrenzwinkel |
|---|---|---|
| a<br><br>(Schnitt A - A) | $\delta = 0°$<br><br>$\beta = \arccos\left(\dfrac{Ra^2 + Rs^2 - (Ri + Ra)^2}{2\,Ra\,Rs}\right)$<br><br>$-\arccos\left(1 - \dfrac{(Ri + Ra)^2}{2\,Ra^2}\right)$ | $\delta = 0°$<br><br>$\beta = 180° - \arccos\left(\dfrac{(Ri + Ra)^2 - Ra^2 - (Ri + Ra - Rs)^2}{-2\,Ra\,(Ri + Ra - Rs)}\right)$ |
| b<br><br>(Schnitt B - B) | $\delta = 0°$<br><br>$\beta = 180° - \arccos\left(\dfrac{(Ri + Ra)^2 - Ra^2 - (Ri + Ra - Rs)^2}{-2\,Ra\,(Ri + Ra - Rs)}\right)$ | $\delta = \delta_{Soll}$<br><br>$\beta = 180° - \arccos\left(\dfrac{(Ri + Ra)^2 - Ra^2 - (Ri + Ra - Rs)^2}{-2\,Ra\,(Ri + Ra - Rs)}\right) + \delta_{Soll}$ |
| c<br><br>(Schnitt C - C) | $\delta = \delta_{Soll}$<br><br>$\beta = 180° - \arccos\left(\dfrac{(Ri + Ra)^2 - Ra^2 - (Ri + Ra - Rs)^2}{-2\,Ra\,(Ri + Ra - Rs)}\right) + \delta_{Soll}$ | $\delta = \delta_{Soll}$<br><br>$\beta = \arccos\left((Ra^2 + Rs^2 - (Ri + Ra)^2)/(2\,Ra\,Rs)\right)$ |
| d<br><br>(Schnitt D - D) | $\delta = \delta_{Soll}$<br><br>$\beta = \arccos\left((Ra^2 + Rs^2 - (Ri + Ra)^2)/(2\,Ra\,Rs)\right)$ | $\delta = \delta_{Soll}$<br><br>$\beta = 360° - \arccos\left(\dfrac{2\,Ra^2 - (Ri + Ra)^2}{2\,Ra^2}\right) - \arccos\left(\dfrac{Ra^2 + Rs^2 - (Ri + Ra)^2}{2\,Ra\,Rs}\right) + \delta_{Soll}$ |
| e<br><br>(Schnitt E - E) | $\delta = \delta_{Soll}$<br><br>$\beta = 360° - \arccos\left(\dfrac{2\,Ra^2 - (Ri + Ra)^2}{2\,Ra^2}\right) - \arccos\left(\dfrac{Ra^2 + Rs^2 - (Ri + Ra)^2}{2\,Ra\,Rs}\right) + \delta_{Soll}$ | $\delta = \delta_{Soll}$<br><br>$\beta = 180° + \arccos\left(\dfrac{Ra^2 + (Ri + Ra - Rs)^2 - (Ri + Ra)^2}{2\,Ra\,(Ri + Ra - Rs)}\right) - \arccos\left(\dfrac{2\,Ra^2 - (Ri + Ra)^2}{2\,Ra^2}\right)$ |

| Profilabschnitt | Anfangsgrenzwinkel | Endgrenzwinkel |
|---|---|---|
| f<br><br>(Schnitt F - F) | $\delta = \delta_{Soll}$<br><br>$\beta = 180° + \arccos\left(\dfrac{R_a^2 + (R_i + R_a - R_s)^2 - (R_i + R_a)^2}{2R_a(R_i + R_a - R_s)}\right) - \arccos\left(\dfrac{2R_a^2 - (R_i + R_a)^2}{2R_a^2}\right)$ | $\delta = 0°$<br><br>$\beta = 180° + \arccos\left(\dfrac{R_a^2 + (R_i + R_a - R_s)^2 - (R_i + R_a)^2}{2R_a(R_i + R_a - R_s)}\right) - \arccos\left(\dfrac{2R_a^2 - (R_i + R_a)^2}{2R_a^2}\right)$ |
| 9<br><br>(Schnitt G - G) | $\delta = 0°$<br><br>$\beta = 180° + \arccos\left(\dfrac{R_a^2 + (R_i + R_a - R_s)^2 - (R_i + R_a)^2}{2R_a(R_i + R_a - R_s)}\right) - \arccos\left(\dfrac{2R_a^2 - (R_i + R_a)^2}{2R_a^2}\right)$ | $\delta = 0°$<br><br>$\beta = 360° - \arccos\left(\dfrac{2R_a^2 - (R_i + R_a)^2}{2R_a^2}\right) - \arccos\left(\dfrac{R_a^2 + R_s^2 - (R_i + R_a)^2}{2R_a R_s}\right) + \arccos\left(1 - \dfrac{(R_i + R_a)^2}{2R_a^2}\right)$ |

**Patentansprüche**

1. Schneckenelement mit einem Außenradius $R_a$ und einem Kemradius $R_i$ für Mehrschneckenextruder mit gleichsinnig drehenden und miteinander kämmenden Schneckenwellen, insbesondere für Doppelschneckenextruder, das im axialen Querschnitt durch seine Längsachse (10) ein Profil aufweist, das an den beiden axialen Stirnseiten (vordere Stirnseite 8, hintere Stirnseite 8') jeweils nur einen einem herkömmlichen eingängigen Schneckenelement für miteinander kämmende Schneckenwellen entsprechenden Schneckensteg (1, 1') aufweist, dessen Stegoberfläche zwischen einer linken (5, 5') und einer rechten Stegkante (6, 6') Teil einer Zylinderoberfläche mit dem Außenradius $R_a$ ist, wobei jede Stirnseite (8, 8') einen kreisförmigen Grund (2, 2') mit dem Kemradius $R_i$ der Schneckenwelle und eine linke (3, 3') und eine rechte Flanke (4, 4') aufweist, die den Grund (2, 2') mit der linken (5, 5') bzw. rechten Stegkante (6, 6') des Schneckenstegs (1, 1') verbindet,
**dadurch gekennzeichnet,**

   - **dass** die Breite (Kammwinkel φ) des Schneckenstegs (1) sich ausgehend von der vorderen Stirnseite (8) und der dem Drehsinn des Schneckenelements entgegengesetzten Stegkante (bei Rechtsdrehung die linke Stegkante 5) entlang der Längsachse (10) bis zu einer Teillänge a der axialen Länge I des Schneckenelements bis auf 0 zu einer Kante (11) reduziert, deren Abstand von der Längsachse (10) sich danach zunächst reduziert und die anschließend mit wieder größer werdendem Abstand von der Längsachse (10) in der dem Drehsinn des Schneckenelements entsprechenden Stegkante (bei Rechtsdrehung die rechte Stegkante 6') an der hinteren Stirnseite (8') endet,
   - **dass** entsprechend umgekehrt die Breite (Kammwinkel φ) des Schneckenstegs (1') sich ausgehend von der hinteren Stirnseite (8') und der dem Drehsinn entsprechenden Stegkante (6') entlang der Längsachse bis zu einer Teillänge a der axialen Länge I des Schneckenelements bis auf 0 zu einer Kante (11') reduziert, deren Abstand von der Längsachse (10) sich danach zunächst reduziert und die anschließend mit wieder größer werdendem Abstand von der Längsachse (10) in der dem Drehsinn des Schneckenelements entgegengesetzten Stegkante (5) an der vorderen Stirnseite (8) endet,
   - und **dass** ein Schersteg (7) mit konstantem Scherstegradius $R_s$, der größer als $R_i$ und kleiner als $R_a$ ist, ausgehend (Punkt 9) von der dem Drehsinn des Schneckenelements entsprechenden Flanke (4) der vorderen Stirnseite (8) schraubenlinienförmig entsprechend dem Drehsinn des Schneckenelements zu der dem Drehsinn des Schneckenelements entgegengesetzten Flanke (3') der hinteren Stirnseite (8') (Punkt 9') verläuft, wobei der Schersteg (7) in seiner axialen Länge aus einem axialen Mittelstück mit im wesentlichen konstanter Stegbreite (Stegwinkel) und daran anschließend zu den beiden Punkten (9, 9') auf den Flanken (4, 3') hin aus jeweils einem Übergangsstück zusammengesetzt ist, dessen Stegbreite sich zur jeweiligen Stirnseite (8, 8') hin zunächst auf 0 reduziert und das dann als Kante in dem jeweiligen Punkt (9, 9') der Flanke (4, 3') an der Stirnseite (8, 8') endet.

2. Schneckenetement nach Anspruch 1,
**dadurch gekennzeichnet,**
**dass** das Profil auf ein dichtes Kämmen der Schneckenelemente ausgelegt ist.

3. Schneckenelement nach Anspruch 2,
**dadurch gekennzeichnet,**
**dass** der Form des Schneckenelements mindestens über ein Teilstück seiner axialen Länge I eine zusätzliche Steigung (Querschnittstordierung) überlagert ist.

4. Schneckenelement nach Anspruch 3,
**dadurch gekennzeichnet,**
**dass** die zusätzliche Steigung zur Verstärkung eines Rückfördereffektes des Schneckenelements durch Tordierung des Querschnitts gegenüber der vorderen Stirnseite in Richtung der vorgesehenen Drehrichtung des Schneckenelements erzeugt ist.

5. Schneckenelement nach Anspruch 3,
**dadurch gekennzeichnet,**
**dass** die zusätzliche Steigung zur Verminderung eines Rückfördereffektes oder zur Erzeugung eines Vorwärtsfördereffektes durch Tordierung des Querschnitts gegenüber der vorderen Stirnseite in Richtung entgegen der vorgesehenen Drehrichtung des Schneckenelements erzeugt ist.

6. Schneckenelement nach einem der Ansprüche 4 - 5,

**dadurch gekennzeichnet,**
**dass** die zusätzliche Steigung dem Schneckenelement über seine gesamte axiale Länge I überlagert ist.

**7.** Schneckenelement nach einem der Ansprüche 1 - 5,
**dadurch gekennzeichnet,**
**dass** mehreren axialen Abschnitten des Schneckenelements unterschiedliche zusätzliche Steigungen überlagert sind.

**Claims**

**1.** Screw element with an outer radius $R_a$ and a core radius $R_i$ for multiscrew extruders with co-rotating and intermeshing screw shafts, in particular for twin-screw extruders, which has in axial cross section through its longitudinal axis (10) a profile which has at each of the two axial end faces (front end face 8, rear end face 8'), only one screw flight (1, 1') corresponding to a conventional single-start screw element for intermeshing screw shafts, the surface of which flight, between a left (5 5') and a right flight edge (6, 6'), is part of a surface of a cylinder with the outer radius $R_a$, each end face (8, 8') having a circular root surface (2, 2') with the core radius $R_i$ of the screw shaft and a left (3, 3') and a right flank (4, 4'), which joins the root surface (2, 2') to the left (5 5') and right flight edge (6, 6'), respectively, of the screw flight (1, 1'), **characterised in that**, as it proceeds from the front end face (8) and the flight edge opposite the direction of rotation of the screw element (in the case of rotation to the right, the left flight edge 5) along the longitudinal axis (10) up to a partial length a of the axial length 1 of the screw element, the width (flight land angle Φ)of the screw flight (1) is reduced down to 0 to form an edge, the distance of which from the longitudinal axis (10) is then initially reduced and subsequently, as the distance from the longitudinal axis (10) increases again, ends in the flight edge corresponding to the direction of rotation of the screw element (in the case of rotation to the right, the right flight edge 6') at the rear end face (8'), **in that** conversely, in a corresponding way, as it proceeds from the rear end face (8') and the flight edge (6') corresponding to the direction of rotation along the longitudinal axis up to a partial length a of the axial length 1 of the screw element, the width (flight land angle Φ) of the screw flight (1') is reduced down to 0 to form an edge (11'), the distance of which from the longitudinal axis (10) is then initially reduced and subsequently, as the distance from the longitudinal axis (10) increases again, ends in the flight edge (5) opposite the direction of rotation of the screw element on the front end face (8), and **in that** a shearing flight (7) with a constant shearing flight radius $R_s$, which is greater than $R_i$ and less than $R_a$, proceeds (point 9) from the flank (4) corresponding to the direction of rotation of the screw element of the front end face (8) in a helical form corresponding to the direction of rotation of the screw element to the flank (3') opposite the direction of rotation of the screw element of the rear end face (8') (point 9'), the shearing flight (7) being made up in its axial length of an axial middle piece of substantially constant flight width (flight angle) and, adjoining the latter to the two points (9, 9') on the flanks (4, 3'), of in each case a transitional piece, the flight width of which is initially reduced to 0 toward the respective end face (8, 8') and then ends as an edge at the respective point (9, 9') of the flank (4, 3') at the end face (8, 8').

**2.** Screw element according to claim 1, **characterised in that** the profile is designed for close meshing of the screw elements.

**3.** Screw element according to claim 2, **characterised in that** the shape of the screw element is superimposed with an additional pitch (cross-sectional twisting), at least over part of its axial length 1.

**4.** Screw element according to claim 3, **characterised in that**, to intensify a backward-conveying effect of the screw element, the additional pitch is produced by twisting the cross section with respect to the front end face in the direction of the intended rotational direction of the screw element.

**5.** Screw element according to claim 3, **characterised in that**, to reduce a backward-conveying effect or to produce a forward-conveying effect, the additional pitch is produced by twisting the cross section with respect to the front end face in the direction counter to the intended rotational direction of the screw element.

**6.** Screw element according to either claim 4 or claim 5, **characterised in that** the additional pitch is superimposed on the screw element over its entire axial length 1.

**7.** Screw element according to any one of claims 1 to 5, **characterised in that** different additional pitches are superimposed on a plurality of axial portions of the screw element.

**Revendications**

1. Elément de vis sans fin comprenant un rayon extérieur $R_a$ et un rayon de noyau $R_i$ pour extrudeuse à vis sans fin multiples dotée d'arbres de vis sans fin tournant dans le même sens et s'engrenant mutuellement, notamment pour extrudeuse à deux vis sans fin, qui comprend dans la section transversale axiale à travers son axe longitudinal (10) un profil, qui comprend sur les deux faces frontales axiales (face frontale avant 8, face frontale arrière 8') respectivement une seule crête de vis sans fin (1, 1') correspondant à un élément de vis sans fin traditionnel à un filet pour des arbres de vis sans fin s'engrenant mutuellement, crête dont la surface entre une arête de crête gauche (5, 5') et droite (6, 6') fait partie d'une surface cylindrique dotée du rayon extérieur $R_a$, chaque face frontale (8, 8') comprenant un fond circulaire (2, 2') doté du rayon de noyau $R_i$ de l'arbre de vis sans fin et un flanc gauche (3, 3') et droit (4, 4'), qui relie le fond (2, 2') à l'arête de crête gauche (5, 5') et/ou droite (6, 6'), **caractérisé en ce que**
   la largeur (angle de dent φ) de la crête de vis sans fin (1) se réduit en partant de la face frontale avant (8) et de l'arête de crête opposée au sens de rotation de l'élément de vis sans fin (lors d'une rotation vers la droite, l'arête de crête gauche 5) le long de l'axe longitudinal (10) jusqu'à une longueur partielle a de la longueur axiale I de l'élément de vis sans fin jusqu'à 0 en direction d'une arête (11), dont la distance par rapport à l'axe longitudinal (10) se réduit après cela tout d'abord et qui termine ensuite avec une distance à nouveau croissante depuis l'axe longitudinal (10) dans l'arête de crête correspondant au sens de rotation de l'élément de vis sans fin (lors d'une rotation vers la droite, l'arête de crête droite 6') sur la face frontale arrière (8'),
   à l'inverse et de manière correspondante, la largeur (angle de dent φ) de la crête de vis sans fin (1) se réduit en partant de la face frontale arrière (8) et de l'arête de crête (6') correspondant au sens de rotation le long de l'axe longitudinal jusqu'à une longueur partielle a de la longueur axiale I de l'élément de vis sans fin jusqu'à 0 en direction d'une arête (11), dont la distance par rapport à l'axe longitudinal (10) se réduit tout d'abord après cela et qui termine ensuite avec une distance à nouveau croissante depuis l'axe longitudinal (10) dans l'arête de crête (5) opposée au sens de rotation de l'élément de vis sans fin sur la face frontale avant (8),
   et une crête de cisaillement (7) dotée d'un rayon de crête de cisaillement constant $R_s$, qui est supérieur à $R_i$ et inférieur à $R_a$, s'étend en partant (point 9) du flanc (4) de la face frontale avant (8) correspondant au sens de rotation de l'élément de vis sans fin de manière hélicoïdale selon le sens de rotation de l'élément de vis sans fin jusqu'au flanc (3') de la face frontale arrière (8') (point 9') opposé au sens de rotation de l'élément de vis sans fin, la crête de cisaillement (7) étant composée dans sa longueur axiale d'une pièce centrale dotée d'une largeur de crête (angle de crête) sensiblement constante et suite à cela, par rapport aux deux points (9, 9') en direction des flancs (4, 3'), de respectivement un raccord conique, dont la largeur de crête se réduit tout d'abord à 0 en direction de la face frontale (8, 8') respective et qui termine alors comme arête dans le point (9, 9') respectif du flanc (4, 3') sur la face frontale (8, 8').

2. Elément de vis sans fin selon la revendication 1, **caractérisé en ce que** le profil est adapté à un engrenage serré des éléments de vis sans fin.

3. Elément de vis sans fin selon la revendication 2, **caractérisé en ce qu'**un pas additionnel (torsion de la section transversale) est superposé à la forme de l'élément de vis sans fin au moins sur un tronçon de sa longueur axiale I.

4. Elément de vis sans fin selon la revendication 3, **caractérisé en ce que** le pas additionnel est produit pour renforcer un effet retour de l'élément de vis sans fin par torsion de la section transversale par rapport à la face frontale avant en direction du sens de rotation prévu de l'élément de vis sans fin.

5. Elément de vis sans fin selon la revendication 3, **caractérisé en ce que** le pas additionnel est produit pour réduire un effet retour ou pour produire un effet d'avancement par torsion de la section transversale par rapport à la face frontale avant dans la direction opposée au sens de rotation prévu de l'élément de vis sans fin.

6. Elément de vis sans fin selon l'une quelconque des revendications 4 à 5, **caractérisé en ce que** le pas additionnel est superposé à l'élément de vis sans fin sur l'ensemble de sa longueur axiale I.

7. Elément de vis sans fin selon l'une quelconque des revendications 1 à 5, **caractérisé en ce que** différents pas additionnels sont superposés à plusieurs sections axiales de l'élément de vis sans fin.

Fig. 1a

Fig. 1b

Fig. 2a

Fig. 2b

EP 1 377 429 B1

Fig. 3

17

**A - A**

**Fig. 4**

**B - B**

$P_{1b} = 6'$

$P_{2b}$

7

$P_{3b}$

$\alpha$

$\delta$

$\beta$

$P_{7b}$

1'

10

$P_{4b}$

5'

$P_{8b}$

2

$P_{6b}$

$P_{5b}$

**Fig. 5**

EP 1 377 429 B1

C - C

Fig. 6

20

**D - D**

**Fig. 7**

E - E

Fig. 8

# F - F

**Fig. 9**

G - G

**Fig. 10**

**Fig. 11a**

EP 1 377 429 B1

Fig. 11b

Fig. 12